Europäisches Patentamt

European Patent Office

Office européen des brevets

(11) Veröffentlichungsnummer: **0 423 143 B1**

## EUROPÄISCHE PATENTSCHRIFT

(45) Veröffentlichungstag der Patentschrift: **11.08.93**

(21) Anmeldenummer: **89906036.2**

(22) Anmeldetag: **31.05.89**

(86) Internationale Anmeldenummer:
**PCT/DE89/00347**

(87) Internationale Veröffentlichungsnummer:
**WO 90/00726 (25.01.90 90/03)**

(51) Int. Cl.⁵: **G01F  23/28**

(54) **FÜLLSTANDSANZEIGER.**

(30) Priorität: **07.07.88 DE 3822994**

(43) Veröffentlichungstag der Anmeldung:
**24.04.91 Patentblatt  91/17**

(45) Bekanntmachung des Hinweises auf die
Patenterteilung:
**11.08.93 Patentblatt  93/32**

(84) Benannte Vertragsstaaten:
**DE FR GB IT**

(56) Entgegenhaltungen:
**EP-A- 0 247 908**
**EP-A- 0 248 995**
**FR-A- 2 402 861**

**Patent Abstracts of Japan, Band 10, Nr. 9
(P-420)(2066), 14. January 1986; & JP, A,
60166811**

(73) Patentinhaber: **ROBERT BOSCH GMBH**
**Postfach 30 02 20**
**W-7000 Stuttgart 30(DE)**

(72) Erfinder: **ZABLER, Erich**
**Brunhildstr. 11**
**W-7513 Stutensee B1(DE)**
Erfinder: **DUKART, Anton**
**Sparbenhecke 14D**
**W-6729 Maximiliansau(DE)**
Erfinder: **GREIN, Nicolas**
**Reinhold-Franck-Str. 20**
**W-7500 Karlsruhe 1(DE)**
Erfinder: **MÜLLER, Klaus**
**Am Rankrain 12**
**W-7552 Durmersheim(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Stand der Technik

Die Erfindung geht aus von einem Füllstandsanzeiger nach der Gattung des Hauptanspruchs. Es ist bereits bekannt, den Schall in einen schalleitenden Festkörper einzuleiten und mit Hilfe eines Empfängers die Veränderung der Ausbreitungsgeschwindigkeit (Phasengeschwindigkeit) von Biegewellen zu bestimmen. Im Festkörper wird abhängig von der Höhe des Flüssigkeitsspiegels die Ausbreitungsgeschwindigkeit der Biegewellen beeinflußt. Als Referenzgröße dient hierbei die Ausbreitungsgeschwindigkeit im Festkörper bei einem leeren Flüssigkeitsbehälter. Hierzu sind zusätzliche Messungen notwendig. Ferner dürfen Sender und Empfänger nicht mit der Flüssigkeit in Berührung kommen, andernfalls ergeben sich Nachteile wegen mangelnder Dichtheit des Senders bzw. des Empfängers oder ungenügender Resistenz der Klebestellen.

In der Schrift FR-A1 24 02 861 (DE-A1 28 39 634) wird ein Füllstandssensor beschrieben, der mit Biegewellen arbeitet. Hierzu ist am Anfang und am Ende des Übertragungskörpers ein Sender und ein Empfänger angeordnet. Der Sender weist einen Oszillator auf, der den Übertrager mit einer bestimmten Frequenz versorgt. Die relative Phasenlage der Biegewellen wird mit Hilfe eines digitalen Phasendetektors im Empfänger gemessen. Als Meßsignal wird die Veränderung der Phasengeschwindigkeit der Biegewellen ausgewertet. Bei diesem Fülllstandssensor ist aber nur eine gleichmäßige Erfassung der Füllstandshöhe über die gesamte Höhe der Flüssigkeit möglich. Ferner wird die Schallimpedanz nicht ausgewertet.

Beim Füllstandssensor nach dem Patent Abstracts of Japan Band 10 Nr. 9 (B-420) (2066), 14.1.1986 wird mit Hilfe einer Einheit ein Geber zu Schwingungen angeregt. Die Frequenz dieser Schwingungen ist abhängig von der Eintauchtiefe des Gebers in die zu bestimmende Flüssigkeit und wird ferner mit Hilfe eines Beschleunigungsaufnehmers ermittelt. Auch hier ist eine gleichmäßige Erfassung der Füllstandshöhe über die gesamte Tiefe möglich. Ferner wird die Frequenz der übertragenen Schwingungen ausgewertet.

Beim Füllstandskontrollgerät nach der EP-A1-0 248 995 wird die Dämpfung eines als Biegeschwinger ausgebildeten Stabes durch ein Schwingungsabgriffsystem ausgewertet. Diese von der Füllguthöhe abhängige Bedämpfung der Schwingungen wird mit Hilfe zweier piezoelektrischer Elemente ermittelt. Ferner ist ein ebenfalls nach einem anderen Meßprinzip arbeitender Füllstandssensor aus der EP-A-0 247 908 bekannt. Hier wird die Reflexion der Wellen an der Oberfläche der Flüssigkeit ausgewertet.

Vorteile der Erfindung

Der erfindungsgemäße Füllstandsanzeiger mit den kennzeichnenden Merkmalen der unabhängigen Ansprüche 1 und 3 hat demgegenüber den Vorteil, daß er zuverlässig und störsicher bei einer hohen Auflösung und einen großen Meßeffekt die Füllstandshöhe bestimmt. Bei einem linearen Verlauf der Meßsignale ist eine einfache Auswertung der Meßsignale möglich. Sender und Empfänger können in einem Gehäuse kompakt angeordnet werden, was eine Vereinfachung aller notwendigen Schutzmaßnahmen gegen Umwelteinflüsse wie z.B. Schmutz, Feuchte oder gegen eine Temperaturdrift der Eigenschaften von verwendeten elektrischen Bauteilen mit sich bringt. Bei beliebiger Ausgestaltung des Schallleiters können Sender und Empfänger immer außerhalb der zu bestimmenden Flüssigkeit angeordnet werden. Im Unterschied zu einem U-förmigen Schalleiter, mit dem Sender und Empfänger außerhalb des Mediums angeordnet werden können, ist nur eine relativ kurze Länge des Schalleiters notwendig. Der Füllstandsanzeiger ist deshalb für beliebige Behälterformen verwendbar. Er baut einfach und kostengünstig.

Durch die in den Unteransprüchen aufgeführten Maßnahmen sind vorteilhafte Weiterbildungen der in den unabhängigen Ansprüchen 1 und 3 angegebenen Füllstandsanzeiger möglich.

Zeichnung

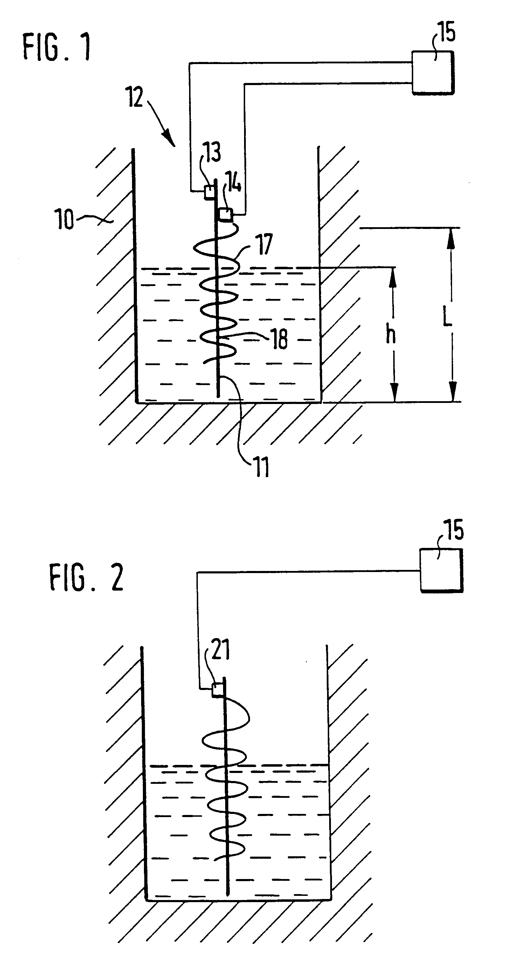

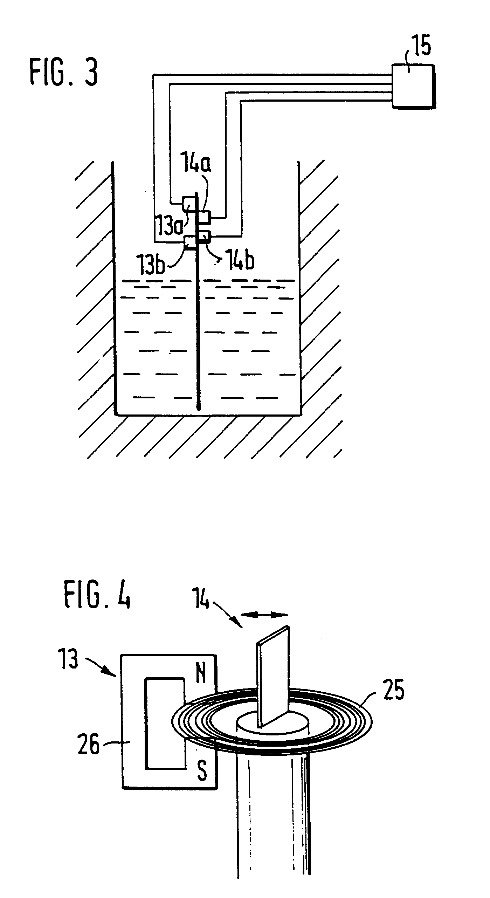

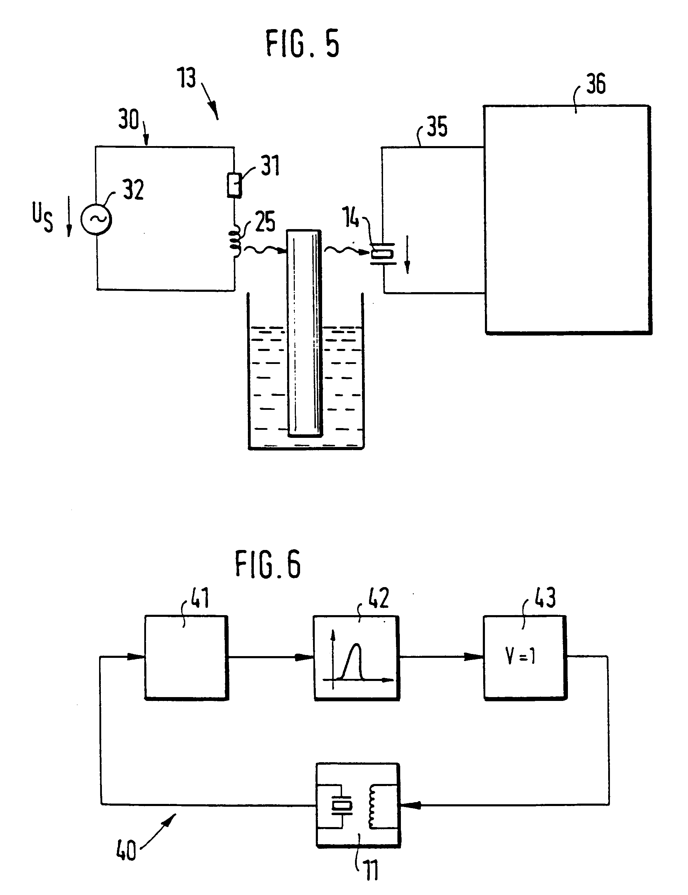

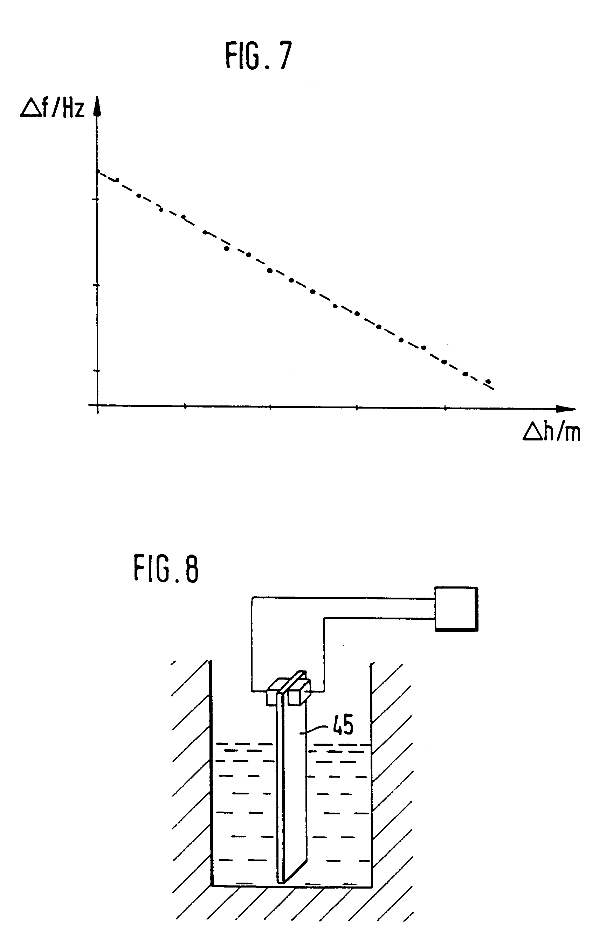

Ausführungsbeispiele der Erfindung sind in der Zeichnung dargestellt und in der nachfolgenden Beschreibung näher erläutert. Es zeigen Figur 1 einen Längsschnitt durch einen Füllstandsanzeiger, die Figuren 2 und 3 je eine Abwandlung nach Figur 1, Figur 4 eine perspektivische Darstellung einer konstruktiven Ausführung, Figur 5 eine Prinzipdarstellung, Figur 6 den Füllstandsanzeiger in einem Oszillator geschaltet, Figur 7 ein Meßdiagramm und die Figuren 8 bis 10 je eine Abwandlung zur Bestimmung des Reservebereichs.

EP 0 423 143 B1

Beschreibung der Ausführungsbeispiele

In Figur 1 ist mit 10 der Tank für den Kraftstoff eines Kraftfahrzeugs bezeichnet, in den ein Schalleiter 11 eines Füllstandsanzeigers 12 für die Kraftstoffmenge in den Tank ragt. Der Schalleiter 11 weist an seinem oberen, aus dem Kraftstoff ragenden Ende einen Sender 13, und einen Empfänger 14 auf. Der Sender 13 ist als Schwinger für insbesondere Ultraschallwellen ausgebildet. Sowohl der Sender 13 als auch der Empfänger 14 sind über der maximalen Füllhöhe L des Tanks 10 angeordnet, so daß beide nicht in den Kraftstoff hineinragen. Die effektive Füllhöhe des Kraftstoffs im Tank 10 ist mit h bezeichnet. Der Sender 13 und der Empfänger 14 sind mit einer nicht näher dargestellten Auswerteeinrichtung 15 verbunden.

Vom Sender 13 werden im Schalleiter 11 Schallwellen 17, sogenannte Biegewellen, d.h. transversale Wellen, deren Ausbreitungsgeschwindigkeit frequenzabhängig ist, angeregt. Bei Biegewellen handelt es sich um Körperschallwellen auf Platten oder Stäben, deren schwingende Teilchen im wesentlichen senkrecht zur Plattenebene und zur Ausbreitungsgeschwindigkeit bewegt werden. Ferner ist deren Fortpflanzungsgeschwindigkeit im Bereich der Füllhöhe h des Kraftstoffs wesentlich kleiner als in von der Luft über dem Kraftstoff umgebenden Bereich L - h des Schalleiters 11. Die Schallwellen 17 treten, wie in Figur 1 dargestellt, an den Übergangsflächen 18 mit diesen jeweils umgebenden Medium in Kontakt. Die Beeinflussung der Fortpflanzungsgeschwindigkeit der Schallwellen 17 bestimmt sich nach der Größe der Übergangsfläche 18 und ist abhängig von der geometrischen Form des Schalleiters 11. Abhängig von der Füllstandshöhe h ergibt sich eine mehr oder weniger große Veränderung der Ausbreitungsgeschwindigkeit (Phasengeschwindigkeit) der Biegewellen. Dieser Meßeffekt wird auch bei dem im Stand der Technik genannten Füllstandsanzeiger ausgenützt.

Durch die Füllstandshöhe h wird aber nicht nur die Laufzeit der Biegewellen 17 zwischen Sender und Empfänger verändert, sondern es ist auch eine Rückwirkung auf die Schallfeldgrößen im Schalleiter 11 am Ort des Sensors selbst oder in dessen Umgebung meßbar. Unter einem Schallfeld versteht man einen mit Materie, hier z.B. Festkörperteilchen, sonst meist Luft gefüllten Raum, in dem sich Schallwellen ausbreiten. Ein Schallfeld läßt sich quantitativ eindeutig beschreiben, indem man z.B. für jedes schwingende Mediumteilchen die jeweilige Verschiebung aus seiner Ruhelage angibt, die es örtlich und zeitlich erfährt. Diese Größen bezeichnet man als Schallfeldgrößen. In der Praxis pflegt man die Struktur eines Schallfeldes im allgemeinen durch die örtliche und zeitliche Verteilung des Schalldrucks oder der Schallschnelle anzugeben. Da es sich bei Biegewellen um transversale Wellen handelt, spricht man dann hier von Transversaldruck bzw. insbesondere in Festkörpern von Transversalkraft und von Transversalschnelle. In einer ebenen, fortschreitenden Welle erfahren die Mediumteilchen in bzw. entgegen der Richtung der Wellenausbreitung eine Auslenkung, wodurch im Abstand von jeweils einer Wellenlänge λ in wechselnder Folge Verdichtungen und Verdünnungen innerhalb des Mediums entstehen, d.h. es liegen Bereiche von Überdruck und Unterdruck vor. Bei Luftschall stellen die schwingenden Luftpartikel örtliche und zeitliche Änderungen der Luftdichte und somit des Luftdrucks dar. Diese Druckänderungen bezeichnet man als Schalldruck. Der Schalldruck kann relativ leicht mit Hilfe von Mikrofonen gemessen werden.

Unter der Schallschnelle oder auch nur der Schnelle versteht man die Wechselgeschwindigkeit, mit der die schwingenden Partikel des Schallübertragungsmediums, hier des Schalleiters 11, um ihre Ruhelage oszillieren. In einer ebenen, fortschreitenden Schallwelle ist die Schallschnelle jeweils an denjenigen Stellen am größten, wo sich die Bewegung der Teilchen am schnellsten ändert. Dies ist z.B. bei den Nulldurchgängen der Fall. Ferner sind bei einer ebenen fortschreitenden Schallwelle die Schallschnelle und der Schalldruck phasengleich. Im Unterschied zur Schallschnelle handelt es sich bei der Schallgeschwindigkeit um die Ausbreitungsgeschwindigkeit des Schalls, die vorwiegend von den elastischen Eigenschaften des Mediums abhängig ist. Die Schallgeschwindigkeit gibt die Geschwindigkeit an, mit der sich die Schallenergie ausbreitet, während die Schallschnelle lediglich die Wechselgeschwindigkeit der Teilchen darstellt.

Ferner zählen zu den Schallfeldgrößen für das Schallfeld von Biegewellen noch das Biegemoment und die Winkelgeschwindigkeit, wobei es sich um die Momentenfeldgrößen des Schallfelds handelt. Für eine einfache Messung der Füllstandshöhe im Tank 10 genügt es, wenn man nur zwei dieser vier Schallfeldgrößen berücksichtigt. Besonders vorteilhaft ist es, wenn man die Transversalschnelle und die Transversalkraft bestimmt. Zur Füllstandsbestimmung wird der Quotient der an einer bestimmten Stelle des Schalleiters 11 gemessenen Transversalschnelle bzw. der Transversalkraft bestimmt, der als mechanische Transversalimpedanz bezeichnet wird. Der Kehrwert der Transversalimpedanz heißt Transversaladmittanz. Die Beeinflussung der Transversalimpedanz durch die Füllstandshöhe h kann mit einem Schallwandler 21 allein, wie in Figur 2 dargestellt, oder mit einem getrennten Sender 13 und Empfänger 14, wie aus Figur 1 ersichtlich, erfaßt werden. Wird ein einziger Schallwandler 21 verwendet, so wird die Rückwirkung der unterschiedlichen Füllstandshöhe h auf das elektrische Sendesignal des Schallwandlers 21 (Senders) bestimmt. Auch ist ein Sender und ein Empfänger in einem einzigen Gehäuse möglich. Bei einer getrennten Sender- 13 und Empfängeranordnung 14 sind diese möglichst nahe benachbart am Schalleiter 11 anzuordnen. Ferner können auch, wie in Figur 3 gezeigt, mehrere Sender 13a, 13b und mehrere Empfänger 14a, 14b verwendet werden. Dadurch ist eine Referenzmessung möglich. Ferner können auch mit mehreren Sendern 13a, 13b die Biegewellen verstärkt werden bzw. deren Form beeinflußt werden. Es können somit Störgrößen eliminiert bzw. unterdrückt werden. Mit mehreren Empfängern 14a, 14b können die durch die Füllstandshöhe h beeinflußten Biegewellen gut empfangen und ausgewertet werden.

In einer besonders vorteilhaften Ausgestaltung, die in Figur 4 dargestellt ist, wird eine der beiden Schallfeldgrößen der Transversalimpedanz konstant gehalten, während die andere Größe gemessen wird. Z.B. kann man mit einem Sender eine konstante Transversalkraft auf den Schalleiter einprägen, indem man einen konstanten Strom in den Sender einspeist. Dadurch erhält man am Empfänger, der als Schnelleempfänger ausgebildet ist, eine Meßgröße, die der am Meßort definierten Transversalimpedanz proportional ist. Verwendet man als Sender und als Empfänger zwei gleiche Schallwandler, so besteht die Gefahr eines Übersprechens, d.h. der eine Schallwandler beeinflußt den anderen, wodurch die Meßwerte verfälscht werden. Im in Figur 4 dargestellten Beispiel wird für den Sender und für den Empfänger jeweils ein nach einem anderen Prinzip arbeitender Schallwandler verwendet. Es hat sich als besonders vorteilhaft herausgestellt, daß als Sender ein nach dem elektrodynamischen oder elektromagnetischen oder magnetostriktiven Prinzip arbeitender Wandler und als Empfänger ein nach dem elektrostatischen oder piezoelektrischen Prinzip arbeitender Wandler verwendet werden kann.

Das elektromagnetische Prinzip wird z.B. bei Fernsprechnörern (Hörkapseln) verwendet. Elektromagnetische Schallwandler bestehen aus einem Permanentmagneten mit mindestens einer Wicklung und einem beweglichen Anker aus Weicheisen, der im allgemeinen mit einer Membran mechanisch gekoppelt ist. Der elektrodynamische Schallwandler besteht im Prinzip aus einem feststehenden permanenten Magnetfeld und einem darin beweglichen Leiter, der z.B. zu einer Schwingspule aufgewickelt ist. Elektrostatische Schallwandler (auch dielektrische Wandler genannt) sind im Prinzip Kondensatoren, die z.B. eine sehr dünne, schwingfähige (Membran-)Elektrode und eine starre (Gegen-)Elektrode aufweisen. Bei magnetostriktiven Schallwandlern verwendet man den magnetostriktiven Effekt. Es wird hierbei die Längenänderung ausgewertet, die ferromagnetische Körper in einem Magnetfeld erfahren. Für eine einwandfreie Funktion des magnetostriktiven Schallwandlers ist aber eine Vormagnetisierung notwendig. Beim piezoelektrischen Wandler sind z.B. zwei Längsschwinger miteinander verkittet. Bei einer mechanischen Deformation der Längsschwinger treten an der Oberfläche Ladungen auf, die ausgewertet werden können.

In Figur 4 ist als Sender 13 ein elektrodynamischer Wandler vorgesehen, der durch Einprägen eines konstanten Stroms eine konstante Transversalkraft auf den Schalleiter ausübt. Hierzu ist im Bereich des aus der Flüssigkeit ragenden Endes des Schalleiters 11 eine Senderspule 25 mit z.B. dreißig Windungen aufgeklebt. Ferner ist ein Permanentmagnet 26 vorgesehen, durch dessen durch die Pole gebildetes Magnetfeld die Windungen der Spule 25 verlaufen. Als Empfänger 14 ist auf die Stirnseite des Schalleiters 11 ein piezoelektrischer Resonanzschwinger, z.B. ein Piezo-Bimorphschwinger aufgeklebt. Dieser Wandler ist oberhalb einer durch die erste Biege-Resonanzfrequenz des Wandlers bestimmte Grenzfrequenz mit einem nachgeschalteten Differenzierglied als Schnelleempfänger brauchbar. Dies bedeutet, daß der Biegeschwinger zu Eigenschwingungen angeregt wird. Er kann oberhalb einer durch die erste Biege-Resonanzfrequenz des Empfängers bestimmten Grenzfrequenz mit einem nachgeschalteten Differenzierglied verwendet werden.

Die Rückwirkung einer umgebenden Flüssigkeit, z.B. eines Kraftstoffs, auf die Transversaladmittanz bzw. Transversalimpedanz des Schalleiters 11 ist mit Hilfe einer in Figur 5 dargestellten Meßeinrichtung möglich. In einem geschlossenen elektrischen Schaltkreis 30 sind die Spule 25 und ein Vorwiderstand 31 des Senders 13 verschaltet. Der Stromkreis 30 wird von einer konstanten Stromquelle 32 gespeist. In den Empfängerkreis 35 sind der piezoelektrische Empfänger 14 und ein Analysator 36 geschaltet. Für die Meßauswertung wird der Quotient der Empfängerspannung und der Senderspannung herangezogen. Bei Eintauchen des Schalleiters 11 werden die Minima und die Maxima dieses Kurvenverlaufs des Betrags und der Phase nach einer Phasenverschiebung unterworfen. Diese Frequenzverschiebung ist ein Maß für die jeweilige Füllstandshöhe und kann zur Füllstandsmessung ausgenutzt werden. Wird diese Frequenzverschiebung über der Füllstandshöhe h aufgetragen, so erhält man einen nahezu linearen Zusammenhang.

In der Figur 6 ist der Schalleiter 11 als Frequenz bestimmendes Glied in einem selbstschwingenden Oszillator 40 dargestellt. Der Oszillator 40 weist ferner einen Stromverstärker 41, einen Bandpaß 42 und eine Endstufe 43 auf. Der Oszillator 40 schwingt mit der Frequenz, für welche die Schwingbedingung A > 1 für $\phi$ = 0 gilt, wobei A die Verstärkung des Stromverstärkers 41 und $\phi$ die Phasendrehung des offenen Kreises ist. Bei Eintauchen des Schalleiters 11 in den Kraftstoff wird ein nahezu linearer Zusammenhang zwischen der oben erwähnten Frequenzverschiebung des Oszillators 40 und der Füllstandshöhe h, wie in Figur 7 gezeigt, erzielt.

4

Die durch die Füllstandshöhe h hervorgerufene Phasenwinkeländerung der mechanischen Transversalimpedanz wiederholt sich nach einem Halbwinkel (nach 180°) wieder. Ab dieser Phasenwinkeländerung kann das Meßsignal nicht mehr eindeutig einer bestimmten Füllstandshöhe h zugeordnet werden. Um die Phasenwinkeländerung auf diesen Halbwinkel zu begrenzen, ist die geometrische Form des Schalleiters 11 entsprechend auszubilden.

Während in den bisherigen Ausführungsbeispielen ein stabförmiger Schalleiter 11 dargestellt wurde, weist der Schalleiter 45 nach Figur 8 eine im Querschnitt rechteckige Form auf. Die Breite b des Schalleiters 45 kann mit Hilfe der Gleichung

$$\frac{\Delta c_B}{\Delta c_{Bo}} \approx \sqrt[4]{\frac{(b/\lambda_B)^2}{0{,}35 + (b/\lambda_B)^2}}$$

bestimmt werden, wobei

$c_B$ = Änderung der Biegewellengeschwindigkeit bei Eintauchen in ein Medium

$c_{Bo}$ = Änderung der Biegewellengeschwindigkeit bei "unendlich breiter Platte" (idealisierter Zustand)

b = Breite des Schalleiters 45

$\lambda_B$ = Biegewellenlänge.

Diese Gleichung gilt insbesondere für das Medium Wasser, unterscheidet sich jedoch nicht wesentlich für das Medium Benzin. Die Phasenwinkeländerung kann aus der Biegewellengeschwindigkeitsänderung bestimmt werden.

Will man die zu bestimmenden Phasenwinkeländerungen nicht mehr auf einen Halbwinkel begrenzen, so ist eine zusätzliche Messung mit Hilfe eines Hilfsignals mit einer tieferen Frequenz auszuführen, um die Mehrdeutigkeit der Füllhöhenbestimmung zu eliminieren. Hierzu ist z.B. eine Anordnung mit mehreren Sendern 13a, 13b und Empfängern 14a, 14b, wie bereits in Figur 3 dargestellt, zu verwenden.

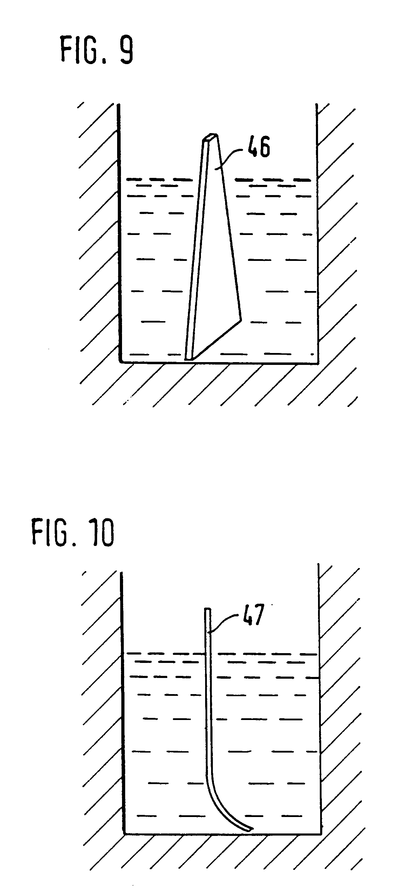

Ferner ist es auch wichtig, in einem Restbereich des Behälters 10 der Flüssigkeit, z.B. im Reservebereich des Kraftstoffs, eine besonders genaue Messung der Füllstandshöhe h durchzuführen. Mit abnehmender Füllstandshöhe soll eine zunehmende Meßempfindlichkeit erzielt werden. Die Figuren 9 und 10 zeigen hierzu besondere konstruktive Ausführungsformen des Schalleiters 11. In Figur 9 ist der Schalleiter 46 trapezförmig ausgebildet, wobei die breitere der parallelen Trapezseiten am Boden des Behälters 10 anliegt. In Figur 10 ist der Schalleiter 47 im Reservebereich gebogen. Hierdurch wird ein der Füllstandshöhe h entsprechend überproportionaler langer Teil des Schalleiters 11 in die Flüssigkeit eingetaucht. Ferner ist es auch möglich den Durchmesser des Schalleiters 11 im mittleren Bereich der Füllstandshöhe h zu verringern, um in den beiden Randbereichen eine höhere Meßempfindlichkeit zu erreichen. Diese Ausbildung kann auch zur Kompensation von unregelmäßigen Behälterformen verwendet werden. Je dicker dabei der Stab ist, desto größer ist die Meßempfindlichkeit.

**Patentansprüche**

1. Füllstandsanzeiger (12), insbesondere für Kraftstoffbehälter (10) von Kraftfahrzeugen, der mit Hilfe mindestens eines Biegewellen aussendenden Senders (13) und mindestens eines Empfängers (14) und mindestens eines in den Behälter (10) und in das zu bestimmende Medium ragenden, aus mindestens einem schalleitenden Werkstoff bestehenden Übertragungskörper (11) arbeitet, dadurch gekennzeichnet, daß die durch die unterschiedlichen Füllstandshöhen (h) bewirkte Veränderung der Transversalimpedanz oder der Transversaladmittanz des Übertragungskörpers (11) bestimmt wird, und daß der Übertragungskörper (11) wenigstens in einem Randbereich pro Volumeneinheit des zu bestimmenden Mediums eine größere Fläche aufweist, so daß der Übertragungskörper in diesem Randbereich eine größere Meßempfindlichkeit aufweist.

2. Füllstandsanzeiger nach Anspruch 1, dadurch gekennzeichnet, daß der Übertragungskörper (11) trapezförmig ausgebildet ist, wobei die breitere der parallelen Trapezseiten dem Boden des Behälters (10) zugewandt ist.

**3.** Füllstandsanzeiger (12), insbesondere für Kraftstoffbehälter (10) von Kraftfahrzeugen, der mit Hilfe mindestens eines Biegewellen aussendenden Senders (13) und mindestens eines Empfängers (14) und mindestens eines in den Behälter (10) und in das zu bestimmende Medium ragenden, aus mindestens einem schalleitenden Werkstoff bestehenden Übertragungskörper (11) arbeitet, dadurch gekennzeichnet, daß die durch die unterschiedlichen Füllstandshöhen (h) bewirkte Veränderung der Transversalimpedanz oder der Transversaladmittanz des Übertragungskörpers (11) bestimmt wird, und daß der Übertragungskörper (47) im Randbereich gebogen ist, so daß der Übertragungskörper in diesem Bereich eine größere Meßempfindlichkeit aufweist.

**4.** Füllstandsanzeiger nach einem der Ansprüche 1 bis 3, dadurch gekennzeichnet, daß mindestens ein Sender (13) und ein Empfänger (14) räumlich möglichst nahe beieinander am Übertragungskörper (11) außerhalb des Mediums angeordnet sind.

**5.** Füllstandsanzeiger nach einem der Ansprüche 1 bis 4, dadurch gekennzeichnet, daß der Sender (13) und der Empfänger (14) in einem gemeinsamen Gehäuse angeordnet sind.

**6.** Füllstandsanzeiger nach einem der Ansprüche 1 bis 3, dadurch gekennzeichnet, daß die Rückwirkung der unterschiedlichen Füllstandshöhe (h) auf das elektrische Sendesignal des Senders (13) bestimmt wird.

**7.** Füllstandsanzeiger nach einem der Ansprüche 1 bis 6, dadurch gekennzeichnet, daß der Sender (13) nach dem elektrodynamischen oder elektromagnetischen oder magnetostriktiven Prinzip arbeitet und der Empfänger (14) nach dem elektrostatischen oder piezoelektrischen Prinzip arbeitet.

**8.** Füllstandsanzeiger nach einem der Ansprüche 1 bis 7, dadurch gekennzeichnet, daß der Sender (13) im zur Auswertung verwendeten Frequenzbereich näherungsweise eine konstante Transversalkraft auf den Übertragungskörper (11) ausübt.

**9.** Füllstandsanzeiger nach Anspruch 8, dadurch gekennzeichnet, daß der Sender (13) mit einem nahezu konstanten Wechselstrom gespeist wird.

**10.** Füllstandsanzeiger nach einem der Ansprüche 1 bis 9, dadurch gekennzeichnet, daß mehrere Sender (13) und mehrere Empfänger (14) am Übertragungskörper (11) angeordnet sind und daß ein Sender (13) und ein Empfänger (14) als Referenzmeßstrecke dienen.

**Claims**

**1.** Filling-level indicator (12), especially for fuel tanks (10) of motor vehicles, which works by means of at least one transmitter (13) emitting flexural waves and at least one receiver (14) and at least one transmission body (11) projecting into the tank (10) and into the medium to be determined and consisting of at least one sound-conducting material, characterised in that the variation, caused by the varying filling-level heights (h), in the transverse impedance or the transverse admittance of the transmission body (11) is determined, and in that at least in an edge region the transmission body (11) has a larger area per unit volume of the medium to be determined, so that the transmission body has a greater measuring sensitivity in this edge region.

**2.** Filling-level indicator according to Claim 1, characterised in that the transmission body (11) is trapezoidally designed, the wider of the parallel trapeze sides facing the floor of the tank (10).

**3.** Filling-level indicator (12), especially for fuel tanks (10) of motor vehicles, which works by means of at least one transmitter (13) emitting flexural waves and at least one receiver (14) and at least one transmission body (11) projecting into the tank (10) and into the medium to be determined and consisting of at least one sound-conducting material, characterised in that the variation, caused by the varying filling-level heights (h), in the transverse impedance or the transverse admittance of the transmission body (11) is determined, and in that the transmission body (47) is bent in the edge region, so that the transmission body has a greater measuring sensitivity in this edge region.

**4.** Filling-level indicator according to one of Claims 1 to 3, characterised in that at least one transmitter (13) and one receiver (14) are arranged as near to one another spatially as possible at the transmission body (11) outside the medium.

**5.** Filling-level indicator according to one of Claims 1 to 4, characterised in that the transmitter (13) and the receiver (14) are arranged in a common housing.

**6.** Filling-level indicator according to one of Claims 1 to 3, characterised in that the reaction of the varying filling-level height (h) to the electrical transmission signal of the transmitter (13) is determined.

**7.** Filling-level indicator according to one of Claims 1 to 6, characterised in that the transmitter (13) operates according to the electrodynamic or electromagnetic or magnetostrictive principle, and the receiver (14) operates according to the electrostatic or piezoelectric principle.

**8.** Filling-level indicator according to one of Claims 1 to 7, characterised in that in the frequency range used for evaluation the transmitter (13) exercises an approximately constant transverse force on the transmission body (11).

**9.** Filling-level indicator according to Claim 8, characterised in that the transmitter (13) is fed with a virtually constant alternating current.

**10.** Filling-level indicator according to one of Claims 1 to 9, characterised in that several transmitters (13) and several receivers (14) are arranged on the transmission body (11), and in that one transmitter (13) and one receiver (14) serve as reference measuring stage.

**Revendications**

**1.** Indicateur du niveau de remplissage (12), destiné notamment aux réservoirs de carburant (10) de véhicules automobiles, utilisant au moins un émetteur (13) d'ondes de flexion, au moins un récepteur (14) et au moins un transmetteur (11) plongé dans le milieu liquide d'un réservoir (10) et constitué d'un matériau conducteur de son, caractérisé en ce qu'on détermine la variation de l'impédance transversale ou de l'admittance transversale du transmetteur (11) produite par la variation du niveau h de remplissage, le transmetteur (11) présentant, au moins dans la zone d'extrémité par unité de volume du liquide à déterminer une surface plus franche, de telle sorte que le transmetteur (11) présente dans la zone d'extrémité une plus grande sensibilité.

**2.** Indicateur de niveau selon la revendication, caractérisé en ce que le transmetteur de son (11) a la forme d'un trapèze dans la grande base est placée près du fond du réservoir.

**3.** Indicateur de niveau de remplissage (12), destiné notamment aux réservoirs de carburant (10) de véhicules automobiles, utilisant au moins un émetteur (13) d'ondes de flexion, au moins un récepteur (14) et au moins un transmetteur (11) plongé dans le milieu liquide d'un réservoir (10) constitué d'un matériau conducteur du son, caractérisé en ce qu on détermine la variation de l'impédance transversale ou de l'admittance transversale du transmetteur (11) produite par la variation du niveau h de remplissage, le transmetteur (11) étant recourbé dans sa zone d'extrémité de manière à accroître la sensibilité de la mesure dans cette zone.

**4.** Indicateur de mesure selon l'une des revendications 1 à 3, caractérisé en ce qu'il comporte au moins un émetteur (13) et un récepteur (14) disposés le plus près l'un de l'autre possible, le long du transmetteur (11), en dehors du milieu liquide.

**5.** Indicateur de niveau selon l'une des revendications 1 à 4, caractérisé en ce que l'émetteur (13) et le récepteur (14) sont montés dans un boîtier commun.

**6.** Indicateur de niveau selon l'une des revendications 1 à 3, caractérisé en ce qu'on mesure la réaction produite par la variation du niveau (h) sur le signal électrique fourni par l'émetteur (13).

7. Indicateur de niveau selon l'une des revendications 1 à 6, caractérisé en ce que l'émetteur (13) est du type électrodynamique, électrostatique ou à magnétostriction tandis que le récepteur (14) est du type électrostatique ou piézo-électrique.

8. Indicateur de niveau selon l'une des revendications 1 à 7, caractérisé en ce que l'émetteur (13) exerce sur le transmetteur (11) une force transversale à peu près constante, dans le domaine de fréquences à exploiter.

9. Indicateur de niveau selon la revendication 8, caractérisé en ce l'émetteur (13) est alimenté par un courant alternatif sensiblement constant.

10. Indicateur de niveau selon l'une des revendications 1 à 9, caractérisé en ce que plusieurs émetteurs (13) et plusieurs émetteurs (14) sont montés sur le transmetteur (11) et qu'un émetteur (13) et un récepteur (14) définissent la base de mesure.

FIG. 1

FIG. 2

FIG. 3

15

14a

13a

13b    14b

FIG. 4

14

13

N

26    25

S

EP 0 423 143 B1

# FIG. 5

# FIG.6

$V = 1$

11

# FIG. 7

# FIG. 8

FIG. 9

FIG. 10